# EUROPEAN PATENT APPLICATION

(11) **EP 3 372 974 A1**
(43) Date of publication of application: **12.09.2018**
(21) Application number: 15907738.7
(22) Date of filing: 30.12.2015
(51) Int. Cl.: G01M 3/32

(54) **NEGATIVE-PRESSURE AIRTIGHTNESS TESTING APPARATUS AND METHOD**

(30) Priority: 06.11.2015 CN 201510758205
(71) Applicant: Guangzhou Shipyard International Company Limited, Guangzhou, Guangdong 511462 (CN)
(72) Inventor: LI, Xiaoyuan, Guangzhou Guangdong 510382 (CN); QIN, Lijun, Guangzhou Guangdong 511462 (CN); JI, Haijun, Guangzhou Guangdong 511462 (CN)
(74) Representative: Nony
(86) International application number: PCT/CN2015/099889
(87) International publication number: WO 2017/075897

(57) **Abstract**

The present invention discloses a negative-pressure airtightness testing apparatus and method, related to the technical field of airtightness tests. The negative-pressure airtightness testing apparatus includes a sealed housing, wherein an edge of the sealed housing is provided with a sealing member, and the sealing member is configured to be fit to a to-be-tested object, so that a cabin is formed between the sealed housing and the to-be-tested object; the negative-pressure airtightness testing apparatus further includes a negative-pressure forming pipeline system, having a three-way valve, and an air inlet pipe, an air outlet pipe and a connecting pipe which are respectively connected with the three-way valve; the connecting pipe is arranged on the sealed housing and communicated with the cabin; the connecting pipe is provided with a one-way valve; the air inlet pipe is communicated with compressed gas; and the air outlet pipe is used for discharging gas in the three-way valve, the air inlet pipe and the air outlet pipe; and the negative-pressure airtightness testing apparatus further includes a pressure display apparatus configured to display real-time pressure in the cabin. The present invention further provides a method for performing airtightness test with the above-mentioned apparatus. The negative-pressure airtightness testing apparatus and method proposed by the present invention can detect air tightness on site, and are simple, practical, and less in time consumption.

## Description

This application claims priority to a Chinese patent with application No. 201510758205.0 and titled with "a negative-pressure airtightness testing apparatus and method" filed on November 06, 2015, disclosures of which are incorporated herein by reference in their entireties.

### TECHNICAL FIELD

The present invention relates to the technical field of airtightness tests, and in particular relates to a negative-pressure airtightness testing apparatus and method.

### BACKGROUND

When a ship is manufactured, an airtightness test shall be carried out for a steel cabin or a closed space. Generally, the whole cabin shall be subjected to the airtightness test, so a workload is high, and the testing time is long. Furthermore, since most of the airtightness tests can be completed only in a laboratory at present, while a large-sized cabin or closed space is inconvenient to move, the airtightness test for the large-sized cabin or closed space wastes time and labor. A test box used in an existing art is complex in structure, tedious in testing work, and long in testing time.

In view of the above problems, an apparatus and method which can perform the airtightness test at a working site are needed; and an apparatus structure needs to be simplified, and the test workload and test time for the large-sized airtight place need to be reduced.

### SUMMARY

An objective of the present invention is to provide a negative-pressure airtightness testing apparatus. The apparatus is simple in structure, convenient in movement, applicable to the on-site detection and less in airtightness testing time.

Another objective of the present invention is to provide a negative-pressure airtightness testing method, which performs the test by using the above-mentioned negative-pressure airtightness testing apparatus. The method is simple, convenient, practical, and less in time consumption.

In order to achieve the objectives, embodiments of the present invention adopt a technical solution as follows.

A negative-pressure airtightness testing apparatus includes a sealed housing; an edge of the sealed housing is provided with a sealing member, and the sealing member is configured to be fit to a to-be-tested object, so that a cabin is formed between the sealed housing and the to-be-tested object; the negative-pressure airtightness testing apparatus further includes a negative-pressure forming pipeline system having a three-way valve, and an air inlet pipe, an air outlet pipe and a connecting pipe which are respectively connected with the three-way valve; the connecting pipe is arranged on the sealed housing and communicated with the cabin; the connecting pipe is provided with a one-way valve, so that gas in the cabin can enter the three-way valve through the one-way valve; the air inlet pipe is communicated with compressed air; and the air outlet pipe is configured to discharge gas in the three-way valve, the air inlet pipe and the air outlet pipe; and the negative-pressure airtightness testing apparatus further includes a pressure display apparatus configured to display real-time pressure in the cabin.

The sealed housing may include a bottom plate and a barrel; and the bottom plate is arranged at one end of the barrel, and the other end of the barrel is provided with a sealing member.

The sealing member may be oil resistant rubber.

The connecting pipe may be arranged on the bottom plate.

The connecting pipe is detachably connected with the bottom plate.

The connecting pipe may be connected with the bottom plate through threads.

The pressure display apparatus may be arranged on the connecting pipe.

A negative-pressure airtightness testing method employing the above-mentioned negative-pressure airtightness testing apparatus includes following steps: communicating the air inlet pipe and compressed air; opening a three-way valve, so that the air inlet pipe is communicated with the air outlet pipe; measuring pressure in the cabin through the pressure display apparatus; closing the three-way valve when a pressure value in the cabin is equal to pressure of the introduced compressed air, so that no air is discharged from the air outlet pipe; and standing for 10 to 40 min, and monitoring change of readings of the pressure display apparatus.

The present invention has the beneficial effects as follows:

The negative-pressure airtightness testing apparatus proposed by embodiments of the present invention includes the sealed housing forming the cabin with the to-be-tested object; the housing is sealed to the to-be-tested object through the sealing member so as to seal the air tightness of a connecting portion between the housing and the to-be-tested object; the negative-pressure airtightness testing apparatus further includes the negative-pressure forming pipeline system; a negative-pressure is formed in the cabin through the pipeline system; specifically, the pipeline system includes the three-way valve, and the air inlet pipe, the air outlet pipe and the connecting pipe which are respectively connected with the three-way valve; the connecting pipe is used for communicating the three-way valve and the sealed housing and is communicated with the cabin; air in the air inlet pipe, the air outlet pipe and the three-way valve is brought away through compressed gas introduced through the air inlet pipe, so that gas in the cabin enters the three-way valve under an effect of the one-way valve of the connecting pipe; continuous introduction and the outflow of compressed gas enable a negative-pressure to be formed in the cabin; then the air tightness of the cabin is detected by detecting pressure in the cabin through the pressure display apparatus, and the air tightness of the to-be-tested object can be obtained at the same time; and the apparatus is simple in structure, convenient in movement and applicable to the on-site airtightness test.

The negative-pressure airtightness testing method proposed by embodiments of the present invention utilizes the negative-pressure airtightness testing apparatus to perform the test; the connection and the disconnection of compressed gas are controlled through the three-way valve; the air in the three-way valve is brought away through compressed air, so that a negative-pressure is formed in the cabin; when a pressure value in the cabin is equal to pressure of the introduced compressed gas, the introduction of compressed air is stopped, the cabin stands, and change of readings of the pressure display apparatus is monitored, so that the air tightness of the to-be-tested object is judged; and the method is simple, practical and less in time consumption.

### BRIEF DESCRIPTION OF THE DRAWINGS

Fig. 1 is a schematic structural diagram illustrating a negative-pressure airtightness testing apparatus provided by embodiments of the present invention; and
Fig. 2 is a schematic structural diagram illustrating a surface A-A of a sealed housing provided by embodiments of the present invention.

In the drawings, 1. sealed housing; 11. bottom plate; 12. barrel; 2. sealing member; 3. negative-pressure forming pipeline system; 31. three-way valve; 32. air inlet pipe; 33. air outlet pipe; 34. connecting pipe; 35. one-way valve; 4. pressure display apparatus.

### DETAILED DESCRIPTION

A technical solution of the present invention is further described below in combination with the drawings through specific embodiments.

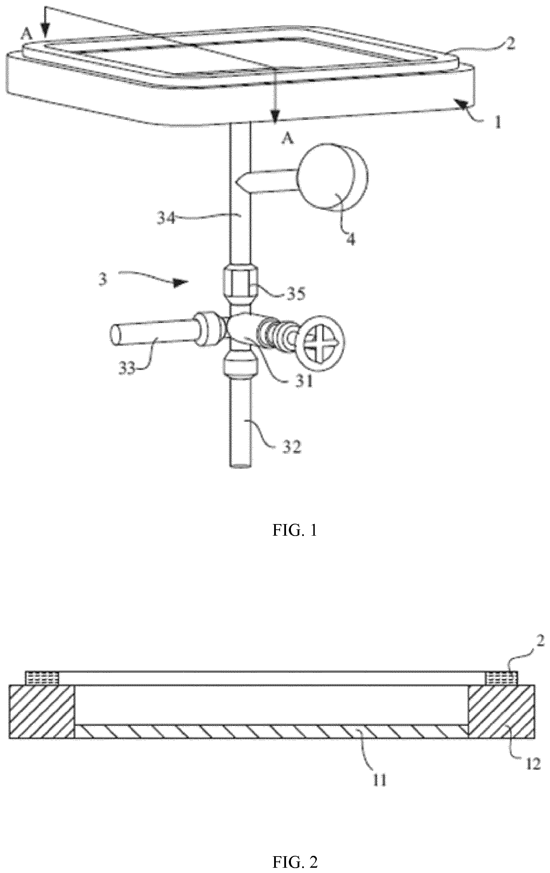

As shown in Fig. 1, embodiments of the present invention provide a negative-pressure airtightness testing apparatus, including a sealed housing 1; an edge of the sealed housing 1 is provided with a sealing member 2; and the sealing member 2 is configured to be fit to a to-be-tested object, so that a cabin is formed between the sealed housing 1 and the to-be-tested object. The sealing member 2 may be a sealing gasket having a sealing effect. Preferably, the sealing member 2 may be oil resistant rubber and has good sealing performance. The negative-pressure airtightness testing apparatus further includes a negative-pressure forming pipeline system 3 including a three-way valve 31, and an air inlet pipe 32, an air outlet pipe 33 and a connecting pipe 34 which are respectively connected with the three-way valve 31. The connecting pipe 34 is arranged on the sealed housing 1 and communicated with the cabin. The connecting pipe 34 is provided with a one-way valve 35, so that gas in the cabin can enter the three-way valve 31 through the one-way valve 35, and gas in the air inlet pipe 32 and the air outlet pipe 33 can be prevented from entering the cabin. The air inlet pipe 32 is communicated with compressed gas, and the air outlet pipe 33 discharges gas in the three-way valve 31, the air inlet pipe 32 and the air outlet pipe 33. The negative-pressure airtightness testing apparatus further includes a pressure display apparatus 4 configured to display real-time pressure in the cabin. Specifically, the pressure display apparatus 4 may be a pressure gauge.

The air inlet pipe 32 of the negative-pressure airtightness testing apparatus introduces compressed gas; compressed gas is discharged through the air outlet pipe 33; original air in the three-way valve 31 is brought away while the compressed air is discharged, so that gas in the cabin enters the three-way valve 31; with continuous discharging of the compressed gas, gas in the cabin is continuously brought away by the compressed gas, so that a negative-pressure is formed in the cabin; the airtightness test is carried out through readings of the pressure gauge so as to achieve the detection purpose; and the negative-pressure airtightness testing apparatus is simple in structure, convenient in operation and less in detection time.

As shown in Fig. 2, the sealed housing 1 includes a bottom plate 11 and a barrel 12; and the bottom plate 11 is arranged at one end of the barrel 12, and the other end of the barrel 12 is provided with a sealing member 2. The bottom plate 11 and the barrel 12 of the sealed housing 1 are of a split-type structure and may be assembled and disassembled; and after being disassembled, the negative-pressure airtightness testing apparatus is convenient to change a test position, and the airtightness test is not limited to a place where the apparatus is located, thereby having flexibility.

The connecting pipe 34 is arranged on the bottom plate 11; and the connecting pipe 34 is detachably connected with the bottom plate 11, so that the negative-pressure airtightness testing apparatus also has a characteristic of flexibility. Preferably, the connecting pipe 34 and the bottom plate 11 may be connected through threads, so that a connecting manner is simple, no additional connecting apparatus is needed, the structure is simple, and the assembly is convenient.

The pressure display apparatus 4 is arranged on the connecting pipe 34; and a specific position of the pressure display apparatus 4 is not limited, as long as the pressure display apparatus 4 can detect a pressure value in the cabin, is convenient to install and convenient to monitor readings.

Embodiments of the present invention provide a testing method of the negative-pressure airtightness testing apparatus, including following steps, in which
the air inlet pipe 32 is communicated with compressed gas; the three-way valve 31 is opened, so that the air inlet pipe 32 is communicated with the air outlet pipe 33; pressure in the cabin is measured through the pressure display apparatus 4; when a pressure value in the cabin is equal to pressure of the introduced compressed air, the three-way valve 31 is closed, so that no gas is discharged from the air outlet pipe 33, and no gas enters the air inlet pipe 32; the cabin stands for a period of time t, where the t is valued at 10 to 40 min, such as 15 min, 20 min, 25 min, 30 min, 35 min, and the like; change of readings of the pressure display apparatus 4 is monitored in a standing process; when readings of the pressure display apparatus 4 are not changed, the air tightness of the cabin is ensured to be good, i.e. the air tightness of the to-be-tested object is good; and when readings of the pressure display apparatus 4 are increased, the air tightness of the to-be-tested object is correspondingly bad, and an air tightness requirement is not met.

Apparently, above embodiments of the present invention are only examples made for clear description of the present invention, rather than limits to the implementation manners of the present invention. Those ordinary skilled in the art can also make other different forms of changes or variations based on the above description. Herein, all implementation manners are not and cannot be listed. Any modification, equivalent replacement, improvement and the like made within the spirit and the principle of the present invention should be included in a protection scope of claims of the present invention.

## Claims

1. A negative-pressure airtightness testing apparatus, comprising a sealed housing (1), wherein an edge of the sealed housing (1) is provided with a sealing member (2), and the sealing member (2) is configured to be fit to a to-be-tested object, so that a cabin is formed between the sealed housing (1) and the to-be-tested object; further comprising a negative-pressure forming pipeline system (3) having a three-way valve (31), and an air inlet pipe (32), an air outlet pipe (33) and a connecting pipe (34) which are respectively connected with the three-way valve (31); the connecting pipe (34) is arranged on the sealed housing (1) and communicated with the cabin; the connecting pipe (34) is provided with a one-way valve (35), so that gas in the cabin can enter the three-way valve (31) through the one-way valve (35); the air inlet pipe (32) is communicated with compressed gas; and the air outlet pipe (33) is configured to discharge gas in the three-way valve (31), the air inlet pipe (32) and the air outlet pipe (33); further comprising a pressure display apparatus (4) configured to display real-time pressure in the cabin.

2. The negative-pressure airtightness testing apparatus according to claim 1, wherein the sealed housing (1) comprises a bottom plate (11) and a barrel (12); and the bottom plate (11) is arranged at one end of the barrel (12), and the other end of the barrel (12) is provided with a sealing member (2).

3. The negative-pressure airtightness testing apparatus according to claim 1, wherein the sealing member (2) is oil resistant rubber.

4. The negative-pressure airtightness testing apparatus according to claim 2, wherein the connecting pipe (34) is arranged on the bottom plate (11).

5. The negative-pressure airtightness testing apparatus according to claim 4, wherein the connecting pipe (34) is detachably connected with the bottom plate (11).

6. The negative-pressure airtightness testing apparatus according to claim 5, wherein the connecting pipe (34) is connected with the bottom plate (11) through threads.

7. The negative-pressure airtightness testing apparatus according to any one of claims 1 to 6, wherein the pressure display apparatus (4) is arranged on the connecting pipe (34).

8. A negative-pressure airtightness testing method employing the negative-pressure airtightness testing apparatus according to any one of claims 1 to 7, comprising following steps: communicating the air inlet pipe (32) and compressed gas; opening the three-way valve (31), so that the air inlet pipe (32) is communicated with the air outlet pipe (33); measuring pressure in the cabin through the pressure display apparatus (4); closing the three-way valve (31) when a pressure value in the cabin is equal to pressure of the introduced compressed air, so that no gas is discharged from the air outlet pipe (33), and no gas enters the air inlet pipe (32); and standing for 10 to 40 min, and monitoring change of readings of the pressure display apparatus (4).
